# EUROPÄISCHE PATENTANMELDUNG

(11) **EP 2 586 640 A2**
(43) Veröffentlichungstag der Anmeldung: **01.05.2013**
(21) Anmeldenummer: 12005195.8
(22) Anmeldetag: 24.07.2012
(51) Int. Cl.: B60K 15/035

(54) **Tankentlüftung mit Venturi-Düse**

(30) Priorität: 27.10.2011 DE 102011054851
(71) Anmelder: Dr. Ing. h.c. F. Porsche AG, 70435 Stuttgart (DE)
(72) Erfinder: Schulz, Helmut, 75233 Tiefenbronn (DE)

(57) **Zusammenfassung**

Tankentlüftungssystem (1) eines Kraftfahrzeugs, welches einen Dampffilter (2) umfasst, der über eine erste Leitung (11) und eine entsprechende erste Einleitstelle (4) mit einem Saugrohr (3) und über eine zweite Leitung (12) und eine entsprechende zweite Einleitstelle (9) mit einer Umgebungsleitung (5) verbunden ist, wobei die zweite Einleitstelle (9) zwischen einem Luftfilter (6) und einem Verdichter (7) an der Umgebungeleitung (5) angeordnet ist, wobei die zweite Leitung (12) eine Verituri-Düse (15) umfasst, die durch Entnahme eines Trägerstroms nach dem Verdichter (7) und vor einer Drosselklappe (8) betrieben wird.

## Beschreibung

Die Erfindung betrifft ein Tankentlüftungssystem eines Kraftfahrzeugs.

Kraftfahrzeuge werden in der Regel mit Tankentlüftungssystemen zur Einstellung gewünschter Druckverhältnisse innerhalb eines im jeweiligen Kraftfahrzeug vorgesehenen Kraftstofftanks ausgerüstet. Vor allem verhindern solche Systeme eine Anreicherung von aus dem entsprechenden Kraftstoff gelösten Kohlenwasserstoffen in der Gasphase.

Damit Kohlenwasserstoffe nicht in die Umwelt gelangen, werden die Tankentlüftungen zur Adsorption von Kraftstoffdämpfen mit speziellen Filtern, meistens Aktivkohlefiltern versehen. Ein derartiger Dampffilter ist ein für Kraftstoffdampf undurchlässiger Filter. Ferner umfasst ein Tankentlüftungssystem eine Motorleitung, die vom Dampffilter zu einem Ansaugtrakt bzw. einer Sauganlage der Brennkraftmaschine führt und in der ein steuerbares Tankentlüftungsventil angeordnet ist. Damit solche Aktivkohlefilter ihre Adsorptionsfähigkeit nicht verlieren, müssen sie im Motorbetrieb gespült bzw. gereinigt werden.

Im Stand der Technik ist bekannt, die Aktivkohle über das Tankentlüftungsventil mit Unterdruck von einem Saugrohr der Sauganlage der jeweiligen Brennkraftmaschine zu beaufschlagen, so dass der Aktivkohlefilter, der über eine im übrigen System der Brennkraftmaschine angeordnete Frischluftleitung gespült wird. Diese mit Kraftstoffdampf angereicherte Spülluft wird im Bereich des Saugrohrs der Brennkraftmaschine der Verbrennung wieder zugeführt. Der Aktivkohlefilter wird daher durch die Unterdruckbeaufschlagung vom Saugrohr mit Umgebungsluft gespült und dadurch passiv regeneriert. Dabei werden Kraftstoffdämpfe in Abhängigkeit vom Saugrohrunterdruck der Verbrennung zugeführt. Nachteilig dabei ist, dass bei geringem Unterdruck in dem Saugrohr der Brennkraftmaschine bei einer weit geöffneten Drosselklappe nicht genug Spülluft über den Aktivkohlefilter angesaugt wird, um ihn zu regenerieren bzw. zu spülen. Ein solcher Fall tritt beispielsweise bei aufgeladenen Motoren, d.h. Brennkraftmaschinen im aufgeladenen Betrieb auf, da dann in der entsprechenden Sauganlage kaum Unterdruck herrscht.

Es ist somit Aufgabe der Erfindung ein Tankentlüftungssystem bereitzustellen, das eine Spülung des Aktivkohlefilters auch im aufgeladenen Betrieb eines Motors eines Kraftfahrzeugs ermöglicht. Weiterhin soll ein Verfahren zur Steuerung eines erfindungsgemäßen Tankentlüftungssystems bereitgestellt werden.

Diese Aufgabe wird erfindungsgemäß durch ein Tankentlüftungssystem für Kraftfahrzeuge mit den Merkmalen des Patentanspruchs 1 sowie durch ein Verfahren nach Patentanspruch 9 gelöst. Vorteilhafte Weiterbildungen der Erfindung sind Bestandteil der entsprechenden Unteransprüche.

Erfindungsgemäß wird vorgeschlagen, ein Tankentlüftungssystem für Kraftfahrzeuge bereitzustellen, welches einen Dampffilter umfasst, der über eine erste Leitung und eine entsprechende erste Einleitstelle mit einem Saugrohr und über eine zweite Leitung und eine entsprechende zweite Einleitstelle mit einer Umgebungsleitung verbunden ist. Dabei ist die zweite Einleitstelle zwischen einem Luftfilter und einem Verdichter an der Umgebungsleitung angeordnet. Ferner umfasst die zweite Leitung eine Venturi-Düse, die durch Entnahme eines Trägerstroms zwischen dem Verdichter und einer Drosselklappe betrieben wird.

Dabei wird die Druckdifferenz zwischen Druck nach Verdichter und Druck vor Verdichter ausgenutzt, um die Venturi-Düse zu betreiben. Dabei wird nach dem Verdichter und vor der Drosselklappe ein Luftmassenstrom als Trägerstrom entnommen und in die Venturi-Düse geleitet.

Unter einem Saugrohr ist ein Bauteil zu verstehen, das unmittelbar an einem Zylinderkopf einer Brennkraftmaschine, insbesondere eines Verbrennungsmotors eines Kraftfahrzeugs angebracht ist und die angesaugte Luft bzw. das angesaugte Luft-Kraftstoff-Gemisch Einlasskanälen der einzelnen Zylinder der entsprechenden Brennkraftmaschine, insbesondere des Verbrennungsmotors zuführt.

Eine Venturi-Düse besteht aus einem glattwandigen Rohrstück mit einer Querschnittsverengung beispielsweise durch zwei gegeneinander gerichtete Konen, die an der Stelle ihres geringsten Durchmessers vereint sind. An dieser Stelle ist orthogonal zur Längsachse des Rohrstücks ein Abnahmerohr platziert. Fließt durch die Venturi-Düse ein gasförmiges oder flüssiges Medium, so ist an der engsten Stelle des Rohrstücks der dynamische Druck (Staudruck) maximal und der statische Druck (Ruhedruck) minimal. Die Geschwindigkeit des fließenden Gases (bzw. der Flüssigkeit) steigt im Verhältnis der Querschnitte beim Durchströmen des eingeschnürten Teils, d.h. der Querschnittsverengung an, weil überall dieselbe Menge durchfließt. Gleichzeitig sinkt der Druck im Abnahmerohr, das genau im engen bzw. eingeschnürten Teil sitzt. Damit entsteht ein Unterdruck, der zum Ansaugen von Flüssigkeiten oder Gasen benutzt wird.

In dem erfindungsgemäßen Tankentlüftungssystem wird durch den Unterdruck in der Venturi-Düse Luft durch den Dampffilter über die zweite Leitung gesaugt, wodurch der Dampffilter regeneriert wird. Der Trägerstrom zusammen mit der durch den Dampffilter gesaugten Luft wird zu der Einleitstelle an der Umgebungsleitung zwischen dem Luftfilter und dem Verdichter geleitet. Dadurch kann der Dampffilter auch im aufgeladenen Betrieb der entsprechenden Brennkraftmaschine bzw. des entsprechenden Motors regeneriert werden, wenn im Saugrohr kein oder nur ein geringer Unterdruck herrscht.

Die Entnahme des Trägerstroms vor der Drosselklappe direkt nach dem Verdichter bietet im Gegensatz zu der möglichen Variante, den Trägerstrom nach der Drosselklappe zu entnehmen, den Vorteil, dass bereits im Übergangsbereich zwischen Saugbetrieb und aufgeladenem Betrieb eine Erhöhung der Regenerierungsleistung des Dampffilters erzielt wird, da vor der Drosselklappe bereits Überdruck vorhanden ist, während nach der Drosselklappe noch Unterdruck herrscht. Durch den Überdruck kann ein Teilmassenstrom entnommen und in die Venturi-Düse geleitet werden, wodurch, wie bereits oben beschrieben, der Dampffilter regeneriert wird.

In einer Ausführungsform des erfindungsgemäßen Tankentlüftungssystems weisen die erste und die zweite Leitung jeweils ein Tankentlüftungsventil auf. Durch die Verwendung je eines Tankentlüftungsventils pro Leitung werden beide Teilströme, die durch die erste bzw. durch die zweite Leitung fließen, druckentkoppelt, so dass beide gleichzeitig fließen können.

In einer anderen Ausführungsform des erfindungsgemäßen Tankentlüftungssystems weist dieses ein Tankentlüftungsventil auf. Dieses ist zwischen dem Dampffilter und der ersten und zweiten Leitung angeordnet.

In einer weiteren Ausführungsform sind die erste und die zweite Leitung über ein Y-Stück mit dem Tankentlüftungsventil verbunden.

Durch die Verwendung eines Tankentlüftungsventils ist es zur Gewährleistung eines optimierten Spülungseffekts empfehlenswert, dass ein Luftstrom nur durch diejenige Leitung der beiden Leitungen, der ersten und der zweiten Leitung strömt, an der der größere Unterdruck anliegt. Die Leitung mit dem geringeren Unterdruck soll dabei geschlossen sein.

In einer Ausführungsform des erfindungsgemäßen Tankentlüftungssystems können die erste und die zweite Leitung jeweils durch ein Rückschlagventil geschlossen werden. Es ist vorgesehen, dass die Rückschlagventile in Fließrichtung zu Beginn der entsprechenden Leitungen in der Nähe des Tankentlüftungsventils angeordnet sind. Die Rückschlagventile sorgen dafür, dass die Leitung mit dem geringeren Unterdruck geschlossen wird, während die Leitung mit dem größeren Unterdruck offen bleibt.

Im aufgeladenen Betrieb des entsprechenden Motors bzw. der entsprechenden Brennkraftmaschine herrscht im Saugrohr kein oder nur ein geringer Unterdruck, während in der Venturi-Düse ein bestimmter größerer Unterdruck vorliegt. Dadurch wird über die zweite Leitung Luft durch den Dampffilter und das Tankentlüftungsventil gesaugt. Das Rückschlagventil in der zweiten Leitung bleibt offen, während das Rückschlagventil der ersten Leitung geschlossen wird.

Im Saugbetrieb dagegen ist der Unterdruck im Saugrohr größer als der in der Venturi-Düse erzeugte Unterdruck. Dadurch wird das Rückschlagventil der zweiten Leitung geschlossen, Luft strömt vom Dampffilter und dem Tankentlüftungsventil über die erste Leitung in das Saugrohr.

In einer Ausführungsform des erfindungsgemäßen Tankentlüftungssystems ist der Dampffilter ein Adsorptionsfilter, beispielsweise ein Aktivkohlefilter.

Weiterhin werden ein Kraftfahrzeug mit einem erfindungsgemäßen Tankentlüftungssystem sowie ein Verfahren zum Steuern eines erfindungsgemäßen Tankentlüftungssystems bereitgestellt.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Figur 1: zeigt in schematischer Darstellung eine Ausführungsform eines erfindungsgemäßen Tankentlüftungssystems.
- Figur 2: zeigt ein Blockdiagramm, auf Basis dessen eine mögliche Ausführungsform des erfindungsgemäßen Tankentlüftungssystems gesteuert wird.
- Figur 3: zeigt ein detailliertes Blockdiagramm nach Figur 2.
- Figur 4: zeigt ein Blockdiagramm, auf Basis dessen eine Ausführungsform des erfindungsgemäßen Verfahrens durchzuführen ist.
- Figur 5: zeigt ein Blockdiagramm, auf Basis dessen eine weitere Ausführungsform des erfindungsgemäßen Verfahrens durchzuführen ist.

Die Erfindung ist anhand von Ausführungsform/en in der Zeichnung schematisch dargestellt und wird unter Bezugnahme auf die Zeichnung schematisch und ausführlich beschrieben.

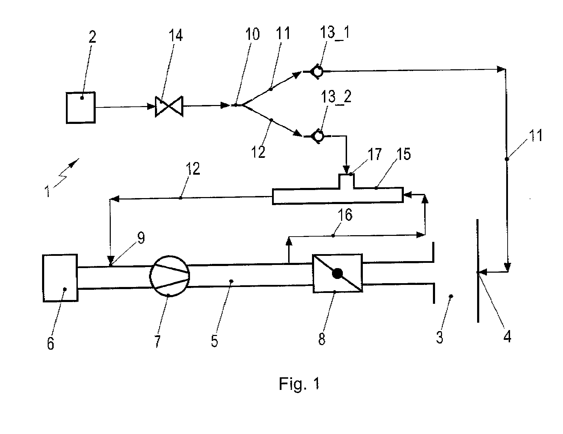

Figur 1 zeigt ein in schematischer Darstellung eine Ausführungsform eines erfindungsgemäßen Tankentlüftungssystems 1. Das Tankentlüftungssystem umfasst eine erste Leitung 11, die ein Dampffilter 2 mit einem Saugrohr 3 verbindet. Die erste Leitung 11 mündet an einer Einleitstelle 4 in das Saugrohr 3. Eine zweite Leitung 12 verbindet den Dampffilter 2 mit einer Umgebungsleitung 5, welche ihrerseits das Saugrohr 3 mit Luft aus der Umgebung versorgt. Die Umgebungsleitung 5 weist stromaufwärts, d.h. von der Umgebung in Richtung Saugrohr 3, einen Luftfilter 6, einen Verdichter (Abgasturbolader) 7 und eine Drosselklappe 8 auf. Zwischen dem Luftfilter 6 und dem Verdichter 7 ist eine Einleitstelle 9 der zweiten Leitung 12 vorgesehen. Die zweite Leitung weist eine Venturi-Düse 15 auf, die durch einen Trägerstrom 16 betrieben wird, der der Umgebungsleitung 5 vor der Drosselklappe 8 und nach dem Verdichter 7 entnommen wird. Die erste Leitung 11 und die zweite Leitung 12 werden an einem Ende durch ein Verteiler-Stück 10 vereint. Unmittelbar vor dem Ende der ersten und der zweiten Leitung 11, 12 vor dem Verteiler-Stück 10 ist auf jeder Leitung 11, 12 jeweils ein Rückschlagventil 13_1, 13_2 angeordnet. Zwischen dem Dampffilter 2 und der Abzweigung der ersten und zweiten Leitung 11, 12 am Verteiler-Stück 10 ist ein Tankentlüftungsventil 14 angeordnet, das den Luftstrom durch den Dampffilter 2 abhängig vom Betriebszustand einer entsprechenden Brennkraftmaschine, insbesondere eines entsprechenden Motors dosiert.

Der Dampffilter 2, der in der Regel ein Aktivkohlefilter ist, adsorbiert Kohlenwasserstoffdämpfe aus einem Kraftstofftank (nicht gezeigt) und verhindert dadurch, dass diese in die Umwelt gelangen. Damit solche Aktivkohlefilter ihre Adsorptionsfähigkeit nicht verlieren, müssen sie im Motorbetrieb von Kraftstoffdämpfen befreit bzw. gereinigt werden. Das wird erreicht, indem der Dampffilter 2 über ein Tankentlüftungsventil 14 mit Unterdruck vom Saugrohr 3 beaufschlagt wird, so dass der Aktivkohlefilter 2, der über eine im übrigen System einer jeweiligen Brennkraftmaschine angeordnete Frischluftleitung (nicht gezeigt) Zuluft erhält, gespült wird. Diese mit Kraftstoffdampf angereicherte Spülluft wird über die erste Leitung 11 im Bereich des Saugrohrs 3 der Brennkraftmaschine der Verbrennung wieder zugeführt.

Dieses Verfahren der Spülung des Dampffilters 2 funktioniert, solange ein geeigneter Unterdruck in dem Saugrohr 3 vorhanden ist. Ist kein Unterdruck im Saugrohr vorhanden, beispielweise bei aufgeladenen Motoren im aufgeladenem Betrieb, so kann auf dem voranstehend beschriebenen Weg der Dampffilter 2 nicht gespült werden. Um den Dampffilter 2 auch im aufgeladenen Betrieb mit Zuluft spülen zu können, weist das Tankentlüftungssystem 1 eine mit der zweiten Leitung 12 verbundene Venturi-Düse 15 auf. Die Venturi-Düse 15 besteht aus einem glattwandigen Rohrstück mit einer Querschnittsverengung, beispielsweise durch zwei gegeneinander gerichtete Konen, die an der Stelle ihres geringsten Durchmessers vereint sind. An dieser Stelle ist orthogonal zur Längsachse des Rohrstücks ein Abnahmerohr 17 platziert. Fließt durch die Venturi-Düse 15 ein gasförmiges Medium, so ist an der engsten Stelle des Rohrstücks der entsprechende Staudruck maximal und der entsprechende Ruhedruck minimal. Die Geschwindigkeit des fließenden Gases steigt im Verhältnis der Querschnitte beim Durchströmen der Querschnittsverenung bzw. des eingeschnürten Teils an, weil überall dieselbe Gasmenge durchfließt. Gleichzeitig sinkt der Druck im Abnahmerohr 17, das genau im engen Teil sitzt. Damit entsteht ein Unterdruck, der zum Ansaugen von Gasen benutzt wird. Die Venturi-Düse 15 wird durch einen Trägerstrom betrieben, indem der Umgebungsleitung 5 nach dem Verdichter 7 und vor der Drosselklappe 8 ein Luftmassenstrom entnommen und in die Venturi-Düse 15 eingeführt wird. Beim Strömen durch die Venturi-Düse 15 wird im Abnahmerohr 17, das mit der zweiten Leitung 12 verbunden ist, ein Unterdruck erzeugt, wodurch der Aktivkohlefilter 2 gespült wird. Der durch die Venturi-Düse 15 fließende Luftstrom wird über die Leitung 12 zur Einleitstelle 9 in die Umgebungsleitung zwischen dem Luftfilter 6 und dem Verdichter 7 geleitet.

Das Tankentlüftungsventil 14 dosiert den Luftstrom durch den Dampffilter 2 abhängig vom Betriebszustand eines entsprechenden Motors und folglich abhängig vom im System herrschenden Unterdruck. Der Luftstrom durch den Dampffilter wird an dem Verteiler-Stück 10 umgeleitet: Entweder strömt er über die erste Leitung 11 in das Saugrohr 3 oder über die zweite Leitung 12 durch die Venturi-Düse 15 in die Umgebungsleitung 5, von wo die Luft über den Verdichter 7 und durch die Drosselklappe 8 zumindest zum Teil ebenfalls das Saugrohr 3 erreicht. Welchen Weg der Luftstrom geht, wird durch den Betrag des Unterdrucks in der ersten bzw. in der zweiten Leitung festgelegt. Ist der Unterdruck in der ersten Leitung 11 größer als am Abnahmerohr 17, so ist das Rückschlagventil 13_1 offen, während das entsprechende Rückschlagventil 13_2 der zweiten Leitung 12 geschlossen ist, so dass der Luftstrom über die erste Leitung 11 strömt. Umgekehrt ist das Rückschlagventil 13_1 geschlossen, während das Rückschlagventil 13_2 der zweiten Leitung 12 offen ist, wenn am Abnahmerohr 17 der Unterdruck größer ist als in der ersten Leitung 11. Ob in der ersten Leitung 11 oder am Abnahmerohr 17 ein größerer Unterdruck herrscht, hängt maßgeblich von dem Betriebszustand des Motors ab. In einem aufgeladenen Zustand ist kaum Unterdruck im Saugrohr 3 und folglich in der ersten Leitung 11 vorhanden, so dass der Dampffilter ausschließlich über den durch die Venturi-Düse 15 erzeugten Unterdruck gespült wird. Dagegen wird im Saugbetrieb der Unterdruck in dem Saugrohr 3 größer sein als in der Venturi-Düse 15, so dass der Luftstrom durch den Dampffilter 2 über die erste Leitung 11 in das Saugrohr 3 gelangt.

Die Entnahme des Trägerstroms vor der Drosselklappe 8 direkt nach dem Verdichter 7 bietet im Gegensatz zu der möglichen Variante, den Trägerstrom nach der Drosselklappe 8 zu entnehmen, den Vorteil, dass bereits im Übergangsbereich zwischen Saugbetrieb und aufgeladenem Betrieb eine Erhöhung der Regenerierungsleistung des Dampffilters 2 erzielt wird, da vor der Drosselklappe 8 bereits Überdruck vorhanden ist, während nach der Drosselklappe 8 noch Unterdruck herrscht. Durch den Überdruck kann ein Teilmassenstrom entnommen und in die Venturi-Düse 15 geleitet werden, wodurch wie bereits oben beschrieben der Dampffilter 2 gespült wird.

Der Durchfluss durch das Tankentlüftungsventil 14 ist abhängig von der Druckdifferenz im System. Die Druckdifferenz bei der Einleitstelle 4 nach der Drosselklappe 8 ist der Umgebungsdruck abzüglich des Drucks im Saugrohr 3. Für die Einleitstelle 9 vor dem Verdichter 7 ist die Druckdifferenz gleich dem durch die Venturi-Düse 15 erzeugten Unterdruck.

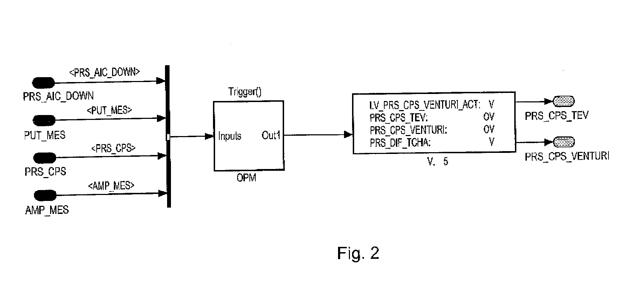

Wie in Figur 2 gezeigt werden die Werte für den Druck vor dem Verdichter (PRS_AIC_DOWN), nach dem Verdichter (PUT_MES), die Druckdifferenz Umgebung-Saugrohrunterdruck (PRS_CPS) sowie der Umgebungsdruck (AMP_MES) einer Recheneinheit OPM über Eingänge "Inputs" geliefert, die daraus die unterschiedlichen Druckdifferenzen im System berechnet. Diese Werte werden über einen Ausgang "Outl" einer weiteren Recheneinheit weitergeleitet, die aufgrund dieser Druckdifferenzen festlegt, über welche Einleitstelle der den Dampffilter spülende Luftstrom (Regeneriermassenstrom) dem Motor zugeführt wird, also entweder über das Tankentlüftungssystem mit dem Druck PRS_CPS_TEV oder die über die Venturi-Düse betriebene Leitung mit dem Druck PRS_CPS_VENTURI. Welche Einleitstelle benutzt wird, wird bestimmt durch LV_PRS_CPS_VENTURI_ACT. Aus dem jeweiligen Druck lässt sich vorausschauend berechnen, wann der jeweilige Luftstrom in den Motor gelangt.

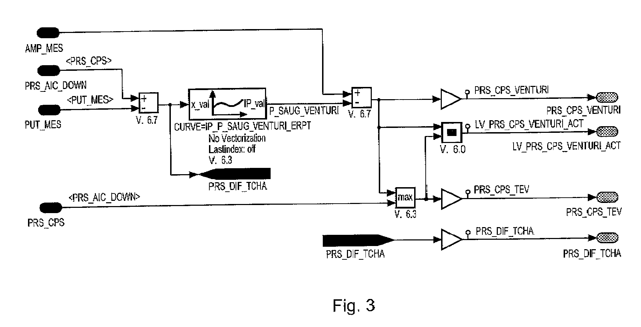

Figur 3 zeigt genauer die in Figur 2 beschriebene Recheneinheit. Der durch die Venturi-Düse 15 erzeugte Unterdruck (P_SAUG_VENTURI) wird als Funktion der Druckdifferenz über den Verdichter 7, d.h. die Differenz des Drucks vor dem Verdichter (PRS_AIC_DOWN) abzüglich des Drucks nach dem Verdichter (PUT_MES), modelliert und ist in der Kennlinie IP_P_SAUG_VENTURI abgelegt. Für weitere Berechnungen wird er auch in PRS_DIF_TCHA zur Verfügung gestellt.

In der Recheneinheit erfolgt eine Max-Auswahl zwischen der Druckdifferenz an der Einleitstelle 4 (PRS_CPS) und der Druckdifferenz am Abnahmerohr 17 vor dem Verdichter 7 (PRS_CPS_VENTURI). Je nachdem, welcher Unterdruck den größeren Wert hat, wird festgelegt, welches Rückschlagventil 13_1, 13_2 geöffnet bzw. geschlossen wird. Gleichzeitig wird anhand des Druckvergleichs die aktive Leitung, d.h. die aktive Einleitstelle, bestimmt (LV_PRS_CPS_VENTURI_ACT).

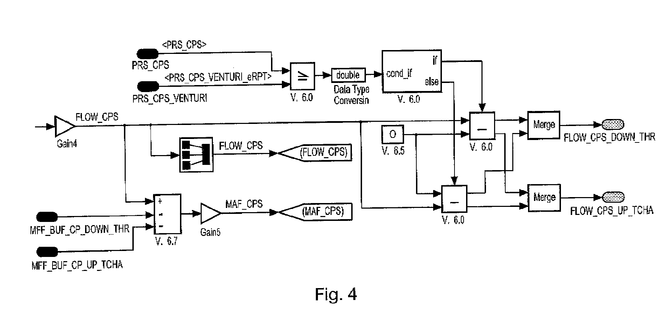

Entsprechendes gilt auf die Luftströme bezogen, wie in Figur 4 ersichtlich. Ist die Druckdifferenz bei der Einleitstelle 4 (PRS_CPS) größer als oder gleich der Druckdifferenz beim Abnahmerohr 17 (PRS_CPS_VENTURI), so erfolgt der Durchfluss durch das Tankentlüftungsventil 14 (FLOW_CPS) über die Einleitstelle 4 (FLOW_CPS_DOWN_THR) in das Saugrohr 3. Ist dagegen die Druckdifferenz bei der Einleitstelle 4 (PRS_CPS) kleiner als die Druckdifferenz beim Abnahmerohr 17 (PRS_CPS_VENTURI), so erfolgt der Durchfluss durch das Tankentlüftungsventil 14 (FLOW_CPS) über die Einleitstelle 9 (FLOW_CPS_UP_TCHA) vor dem Verdichter.

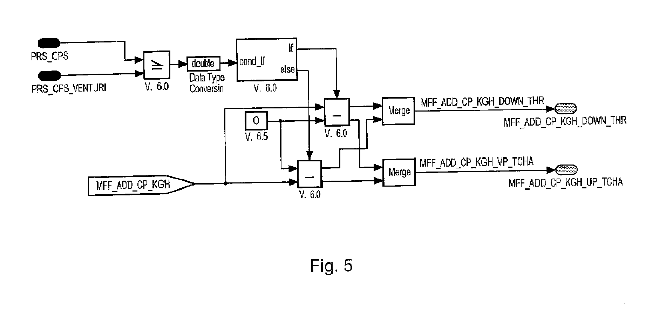

Analoges gilt für die Kraftstoffanteile, wie in Figur 5 ersichtlich. Ist die Druckdifferenz bei der Einleitstelle 4 (PRS_CPS) größer als oder gleich der Druckdifferenz beim Abnahmerohr 17 (PRS_CPS_VENTURI), so erfolgt der Durchfluss durch das Tankentlüftungsventil 14 (FLOW_CPS) über die Einleitstelle 4 (FLOW_CPS_DOWN_THR) und man erhält den Kraftstoffanteil MFF_ADD_CP_KGH_DOWN_THR.

Ist dagegen die Druckdifferenz bei der Einleitstelle 4 (PRS_CPS) kleiner als die Druckdifferenz beim Abnahmerohr 17 (PRS_CPS_VENTURI), so erfolgt der Durchfluss durch das Tankentlüftungsventil 14 (FLOW_CPS) über die Einleitstelle 9 (FLOW_CPS_UP_TCHA) vor dem Verdichter und man erhält den Kraftstoffanteil MFF_ADD_CP_KGH_UP_TCHA.

Die Berechnung der im Brennraum der entsprechenden Brennkraftmaschine, bzw. des entsprechenden Motors vorhandenen Luftmasse der beiden Teilströme aus der Tankentlüftung erfolgt aus dem Summenwert der beiden Teilströme.

Die Berechnung des Kraftstoffanteils im Brennraum der beiden Teilströme aus der Tankentlüftung erfolgt aus dem Summenwert der Kraftstoffanteile der beiden Teilströme. Daraus wird die Einspritzmasse der jeweiligen Injektoren entsprechend korrigiert.

### Bezugszeichenliste (Figuren 2 - 5)

| | |
|---|---|
| ADD | Additive |
| AFS | Air Fuel Stoichometric |
| AFU | Air Fuel |
| AIC | Air Cooler |
| AMP | Ambient Pressure |
| BUF | Buffer |
| CL | Closed Loop |
| COR | Correction |
| CPPWM | Canister Purge Puls Weiten Modulation |
| CP | Canister Purge |
| CPS | Canister Purge Solenoid |
| CTL | Control |
| DIAGCP | Diagnosis Canister Purge |
| DIF | Differenz |
| DLY | Delay |
| DOWN_THR | Nach Drosselklappe |
| eRPT | Externes Rapid Prototyping (veränderte Signalgroße) |
| EVAC | Evaporative Emission Control |
| EVAP | Tankentlüftungssystem |
| FAC | Factor |
| FIL | Filter |
| FLOW | Massenfluss |
| HOM | Homogeneous |
| IP | Interpolated Map |
| IT | Internal |
| KGH | Kg/h |
| LAM | Lambda Control |
| LAMB | Lambda |
| LV | Logical Value |
| MAF | Mass Air Flow |
| MAX | Maximum |
| MEM | Memorise |
| MFF | Mass Fuel Flow |
| MMV | Moving Mean Value |
| N | Drehzahl |
| PHY | Physical |
| PRS | Pressure |
| PUT | Pressure Upstream of Throttle |
| RAF | Ratio of Air Fuel |
| RATIO | Ratio |
| SP | Set Point |
| STATE | State |
| TCHA | Turbolader |
| TEV | Tankentluftungsventil |
| THR | Throttle |
| TIA | Temperature Intake Air |
| TQI | Indicated Engi |
| UP_TCHA | Vor Turbolader |

## Patentansprüche

1. Tankentlüftungssystem (1) eines Kraftfahrzeugs, welches einen Dampffilter (2) umfasst, der über eine erste Leitung (11) und eine entsprechende erste Einleitstelle (4) mit einem Saugrohr (3) und über eine zweite Leitung (12) und eine entsprechende zweite Einleitstelle (9) mit einer Umgebungsleitung (5) verbunden ist,
wobei die zweite Einleitstelle (9) zwischen einem Luftfilter (6) und einem Verdichter (7) an der Umgebungsleitung (5) angeordnet ist,
wobei die zweite Leitung (12) eine Venturi-Düse (15) umfasst, die durch Entnahme eines Trägerstroms nach dem Verdichter (7) und vor einer Drosselklappe (8) betrieben wird.

2. Tankentlüftungssystem (1) nach Anspruch 1, bei dem die erste (11) und die zweite (12) Leitung jeweils ein Tankentlüftungsventil (14) aufweisen.

3. Tankentlüftungssystem (1) nach Anspruch 1, bei dem zwischen dem Dampffilter (2) und der ersten (11) und zweiten (12) Leitung ein Tankentlüftungsventil (14) angeordnet ist.

4. Tankentlüftungssystem (1) nach Anspruch 3, bei dem die erste (11) und die zweite (12) Leitung über ein Verteiler-Stück (10) mit dem Tankentlüftungsventil (14) verbunden sind.

5. Tankentlüftungssystem (1) nach Anspruch 3, bei dem nur diejenige Leitung der beiden Leitungen, der ersten Leitung (11) und der zweiten Leitung (12), geöffnet ist, an der ein größerer Unterdruck anliegt.

6. Tankentlüftungssystem (1) nach einem der Ansprüche 3 bis 5, bei dem die erste (11) und die zweite (12) Leitung jeweils durch ein Rückschlagventil (13_1, 13_2) geschlossen werden können.

7. Tankentlüftungssystem (1) nach Anspruch 1, bei dem der Dampffilter (2) ein Adsorptionsfilter ist.

8. Kraftfahrzeug mit einem Tankentlüftungssystem gemäß einem der Ansprüche 1 bis 7.

9. Verfahren zum Steuern eines Tankentlüftungssystems gemäß einem der Ansprüche 1 bis 7.
